# EUROPÄISCHE PATENTSCHRIFT

(11) **EP 0 797 634 B1**
(45) Veröffentlichungstag und Bekanntmachung des Hinweises auf die Patenterteilung: **04.07.2001**
(21) Anmeldenummer: 95917911.0
(22) Anmeldetag: 11.05.1995
(51) Int. Cl.: C09D 5/32, C09D 7/12, C09C 1/00, B29C 70/58

(54) **ANSTRICHSTOFF MIT NIEDRIGEM EMISSIONSVERMÖGEN IM BEREICH DER WÄRMESTRAHLUNG**
COATING SUBSTANCE WITH LOW EMISSIVITY IN THE HEAT RADIATION RANGE
PEINTURE A FAIBLE POUVOIR EMISSIF DANS LA GAMME DU RAYONNEMENT THERMIQUE

(30) Priorität: 25.05.1994 DE 4418214
(43) Veröffentlichungstag der Anmeldung: 01.10.1997
(73) Patentinhaber: Hugo, Gerd, 86938 Schondorf (DE)
(72) Erfinder: Hugo, Gerd, 86938 Schondorf (DE)
(74) Vertreter: Frank, Veit Peter, Dipl.-Ing.
(86) Internationale Anmeldenummer: DE9500644
(87) Internationale Veröffentlichungsnummer: WO9532251

(56) Entgegenhaltungen:
- EP-A- 0 548 822
- DE-A- 3 606 691
- GB-A- 1 074 891
- US-A- 4 311 623
- US-A- 4 916 014

## Beschreibung

Die Erfindung betrifft einen Anstrichstoff, der ein niedriges Emissionsvermögen im Bereich der Wärmestrahlung hat.

In US-A-4 311 623 wird ein Anstrichstoff beschrieben, der ein niedriges Emissionsvermögen im Bereich der Wärmestrahlung hat und zur Verwendung auf Metalloberflächen, insbesondere als Tarnfarbe für Kriegsschiffe, vorgesehen ist. Als mögliche Pigmente sind Aluminium, Zinksulfid, Antimontrisulfid und blaue Pigmente angegeben. Füllmittel können u. a. Aluminiumoxid und Silikonalkyl-Kunstharzbinder sein. Das niedrige Emissionsvermögen im Bereich der Wärmestrahlung wird durch den hohen Anteil an Aluminium erreicht.

In GB-A-1 074 891 wird ein Verfahren zur Herstellung von Infrarotstrahlung-reflektierenden Pigmenten angegeben, die eine im Infraroten stark reflektierende Verbindung enthalten, die aus der Gruppe der Sulfide, Selenide und Telluride ausgewählt ist. Diese Pigmente weisen ein hohes Reflexionsvermögen für Wellenlängen über 7 µm auf und können in Anstrichen z.B. mit synthetischen Bindemitteln verwendet werden.

Bekannte Anstrichstoffe bestehen im wesentlichen aus Bindemitteln, Pigmenten und verschiedenen Additiven. In normalen Anstrichstoffen haben die Bindemittel und die eingelagerten Pigmente meist eine hohe Absorption im Bereich der Wärmestrahlung und weisen damit auch eine hohe Emission von Wärmestrahlung auf. Als Beispiel sei hier ein Wandanstrich einer Haus-Außenwand auf Silikatbasis genannt. Die eingelagerten Pigmente, die überwiegend aus Kalk bestehen, weisen wie auch schon das Bindemittel auf Silikatbasis hohe Absorptionsbanden im Bereich der Wärmestrahlung des thermischen Infrarotbereiches von 3 bis 100 µm auf. Der Emissionsgrad der Hauswand im Bereich der Wärmestrahlung ist damit > 90%. Das bedeutet, daß die Wand neben den Wärmeverlusten über Konvektion, also dem Wärmeabtrag über die Luft, Wärmeenergie mit M_{S}=ε×σ×T⁴ abstrahlt. Bei einer Wandtemperatur von 0° Celsius (273 K) bedeutet dies, daß bei einem ε von 0,9 Wärme mit 283 Wxm⁻² abgestrahlt wird.

Es ist wichtig zu wissen, daß diese Wärmeverluste eines Hauses über Wärmeabstrahlung zusätzlich entstehen, also vollkommen unabhängig von den Wärmeverlusten über Konvektion sind. Dies ist dadurch zu erklären, daß Luft in weiten Bereichen für Wärmestrahlung transparent ist und sich ein Temperaturgefälle für Wärmestrahlung also nicht nach der Lufttemperatur richtet, sondern nach den Strahlungstemperaturen der Umgebung und des Himmels. Bei klarem Himmel liegen diese Temperaturen deutlich unter der von Luft.

Neben der Vermeidung von Wärmeverlusten an der Außenwand eines Hauses lohnt es sich auch, die Wärmeübergänge durch Strahlung in die Innenseite der Außenwand eines Hauses zu verringern. Alle Objekte wie Möbel, Boden, insbesondere auch die innenliegenden Wände des Hauses geben Wärme in Form von Wärmestrahlung nach den beschriebenen Gesetzmäßigkeiten ab. Auch der Mensch selber gibt Wärme in Form von Strahlung an die Innenseite der Außenwand ab. Insbesondere geben natürlich Heizkörper Strahlungswärme ab und zwar in Richtung des Innenraumes, jedoch gleichermaßen auch an die Innenseite der Außenwand.

Hier wird die Wärmestrahlung entsprechend dem Emissionsgrad ε > 0,9 (Emissionsgrad = Absorptionsgrad) zu über 90% absorbiert und durch Wärmeleitung zur Außenwand transportiert.

Zur Vermeidung von direkten Wärmeübergängen über Strahlung vom Heizkörper in die Wand sind sogenannte "Heizkörperreflexfolien" im Handel erhältlich. Die metallische Oberfläche der Reflexfolien absorbiert nur ca. 10 bis 20% der Wärmestrahlung. Die Differenz zu 100% wird in den Raum, in diesem Fall zum Heizkörper, reflektiert. Leider finden diese Reflexfolien vermutlich aufgrund ihres metallischen Aussehens keine Akzeptanz und werden daher nur selten eingesetzt. Ohnehin wäre eine komplette Auskleidung einer Wohnung mit solchen Reflexfolien nicht sinnvoll, da sie keine oder eine zu geringe Dampfdiffusion zulassen und andererseits aus dem Raum einen Faraday'schen Käfig machen würden. Auch entspricht es nicht den ästhetischen Vorstellungen von der Ausgestaltung einer Wohnung.

Bezüglich der Energieeinsparung würde es sich jedoch lohnen, einen Raum sozusagen nach innen zu verspiegeln, so daß die Wärmestrahlung in den Raum reflektiert wird. Allerdings muß es sich um eine dampfdurchlässige Schicht handeln, die aus dem Raum keinen Faraday'schen Käfig macht und die zudem den ästhetischen Anforderungen entspricht.

Die zunehmende Luftverschmutzung, die zu einem großen Anteil auch durch die Verbrennung fossiler Brennstoffe zur Beheizung von Häusern bedingt ist, aber auch das Wissen, daß die Vorräte an fossilen Brennstoffen irgendwann erschöpft sein werden, machen es erforderlich, alle Möglichkeiten zur Minimierung des Energiebedarfs zu nutzen.

Aufgabe der Erfindung ist es somit, einen verbesserten Anstrichstoff zu schaffen, mit dessen Hilfe man Energie einsparen kann. Ferner soll ein Verfahren zum Herstellen von Schichtpigmenten gefunden werden, die in diesen Anstrichstoffen eingesetzt werden können.

Diese Aufgabe wird durch die in den Patentansprüchen angegebenen Merkmale gelöst, wobei vorteilhafte Ausführungsformen des Erfindungsgegenstandes in den Unteransprüchen angegeben sind.

Überraschenderweise hat sich erfindungsgemäß gezeigt, daß durch Einlagerung von Teilchen, die im Bereich der Wärmestrahlung eine hohe Transparenz aufweisen und deren Brechungsindex im Bereich der Wärmestrahlung größer oder kleiner, auf alle Fälle von dem Brechungsindex des Bindemittels verschieden ist, wobei das Bindemittel im Bereich der Wärmestrahlung einen hohen Durchlaßgrad aufweist, ein Anstrichstoff mit niedrig emittierenden Eigenschaften im Bereich der Wärmestrahlung hergestellt werden kann. Ein solcher Anstrichstoff weist im sichtbaren Bereich keine nachteiligen Effekte auf.

Besonders gute Ergebnisse werden erzielt, wenn das Produkt aus dem Brechungsindex des einzelnen Teilchens im thermischen Infrarotbereich und dem Durchmesser des Teilchens im wesentlichen gleich der halben mittleren Wellenlänge des Wellenlängenbereiches ist, in dem der Anstrichstoff eine niedrig emittierende Wirkung haben soll. Geringe Verschiebungen ergeben sich durch den Brechungsindex des Bindemittels, in das die Teilchen eingebracht sind. Je größer der Brechungsindex des Bindemittels, um so mehr verschiebt sich die mittlere Wellenlänge zum längerwelligen Bereich. Vorzugsweise sollte der prozentuale Füllgrad der Teilchen im Bindemittel bezogen auf das Volumen der Gesamtschicht bei 20 bis 70 Prozent, insbesondere bei 30 bis 50 Prozent liegen.

Der Grad der Reflexion bzw. Emission wird durch den Unterschied zwischen dem Brechungsindex des Bindemittels und dem Brechungsindex der eingelagerten Teilchen bestimmt. Je größer der Unterschied, um so höher stellt sich auch die gewünschte Reflexion ein. Die Brechungsindizes von Bindemitteln mit hoher Transparenz im Bereich der Wärmestrahlung liegen üblicherweise im Bereich von 1,3 bis 1,7. Ein großer Unterschied im Brechungsindex läßt sich also vor allem dann realisieren, wenn der Brechungsindex des Teilchens größer ist als der des Bindemittels. Vorzugsweise sollte er im Bereich 2 bis 4 liegen, aber auch höhere Brechungsindizes der Teilchen sind denkbar. Ist der Brechungsindex des Teilchens kleiner als der des Binders, sollte er möglichst im Bereich von Luft also 1 liegen.

Auch die Bandbreite des Bereiches, in dem die niedrige Emission bzw. höhere Reflexion erzielt werden soll, ist von der Größe des Unterschiedes zwischen dem Brechungsindex des Bindemittels und dem des Teilchens abhängig. Je größer der Unterschied im Brechungsindex der beiden Materialien ist, desto größer ist auch die Bandbreite um die gewählte mittlere Wellenlänge. Bei einem Unterschied im Brechungsindex von 2 (n_{Binder} = 1,5; n_{Teilchen} = 3,5) ergibt sich eine Bandbreite für die erste Resonanz von ca. 6 µm. Damit kann der militärisch relevante Bereich des atmosphärischen Fensters bei 8 - 14 µm niedrig emittierend bzw. reflexiv gestaltet werden. Damit kann der für 300 K Strahler relevante Bereich bei 8 - 14 µm, in dem die Atmosphäre eine hohe Transparenz aufweist und somit Energie in den Weltraum durchläßt, niedrig emittierend bzw. reflexiv gestaltet werden. Folgeresonanzen ergeben sich im ebenfalls relevanten atmosphärischen Fenster bei 3 - 5 µm bis hin zum Bereich des sichtbaren Lichtes.

Als Material für die eingelagerten Teilchen kommen alle Materialien mit hoher Transparenz im Bereich der Wärmestrahlung in Betracht, die einen größeren oder kleineren Brechungsindex als das Bindemittel im Bereich der Wärmestrahlung haben.
Besonders vorteilhaft im Rahmen der Erfindung sind Materialien für die in dem Bindemittel dispergierten Teilchen, die insbesondere aus der Gruppe der folgenden ausgewählt werden können: Germanium, Silizium, Metallsulfide wie z.B. Bleisulfid, Metallselenide wie z.B. Zinkselenid. Metalltelluride oder auch Tellur selber, Chloride wie z.B. Natrium- und Kaliumchlorid, Fluoride wie z.B. Calciumfiuorid, Lithiumfluorid, Bariumfluorid und Natriumfluorid, Antimonide wie z.B. Indiumantimonid.

Die Auswahl an Materialien, die im Wellenlängenbereich der Wärmestrahlung transparent sind und dazu noch einen unterschiedlichen Brechungsindex zum Bindemittel haben, ist begrenzt Erfindungsgemäß können auch Teilchen mit künstlich erhöhtem und verringertem Brechungsindex für diese Anwendung benutzt werden.

Zur Darstellung von Teilchen mit künstlich erhöhtem Brechungsindex werden organische oder auch anorganische Bindemittel mit hoher Transparenz im Bereich der Wärmestrahlung mit kolloidalem Metallpulver dessen Teilchengröße im Bereich 0,05 bis 1 µm liegt zu 10 bis 50 Volumenprozenten so beladen, daß die kolloidalen Teilchen gleichmäßig im Bindemittel verteilt sind. Das so beladene Bindemittel wird getrocknet und nach dem Trocknen auf die gewünschte Komgröße, die sich nach dem Brechungsindex des erhaltenen Materiales richtet, vermahlen. Durch die äußerst geringe Größe der kolloidalen Metallteilchen entstehen keine nachteiligen Refiexionserhöhungen in anderen Wellenlängenbereichen.

In Abhängigkeit von dem Beladungsgrad mit kolloidalem Metallpulver und Brechungsindex des Bindemittels lassen sich so Teilchen herstellen, deren Brechungsindex deutlich über dem des Ausgangsmateriales liegt Bei einem Füllgrad von 30 Volumenprozenten mit kolloidalem Kupfer dessen mittlerer Teilchendurchmesser unter 0,5 µm lag, ließ sich der Brechungsindex der als Bindemittel eingesetzten Polyäthylenschmelze von 1,5 auf 2,2 steigem. Das derart beladene Polyäthylen wurde anschließend mit flüssigen Stickstoff gekühlt und auf die gewünschte Teilchengröße bei 2,5 µm heruntergemahlen.

Da die niedrige Emission bei des erfindungsgemäßen Anstrichstoffes vor allem dadurch erreicht wird, daß die Brechungsindizes von eingelagerten Teilchen und Bindemittel unterschiedlich sind, kann erfindungsgemäß die niedrige Emission auch durch Einlagerung von Luft, also einer Füllung mit niedrigeren Brechungsindex, in ein Bindemittel erreicht werden. Grundsätzlich gelten auch hier die gleichen Voraussetzungen wie im bereits beschriebenen Fall. Eine optimale Wirkung erhält man, wenn der Durchmesser der luftgefüllten Hohlräume im wesentlichen so groß wie die halbe mittlere Wellenlänge des Bereiches ist, in dem man eine niedrige Emission bzw. hohe Reflexion wünscht Die Hohlräume können dabei auf mechanischen Wege durch Sprühverfahren oder durch bekannte chemische Reaktionen in das Bindemittel gebracht werden.

Bei den bisher beschriebenen Methoden zur Darstellung eines niedrig emittierenden Anstrichstoffes war es möglich insbesondere durch die Größe aber auch in Grenzen durch das Füllvolumen bzw. den Beladungsgrad der in ein Bindemittel eingelagerten Teilchen die Wellenlängebereiche in denen die Farbe niedrig emittieren bzw. reflektieren soll, zu bestimmen. Will man jedoch eine möglichst breitbandig niedrig emittierende Farbe, so eignen sich hierfür an sich bekannte, vorgeformte Mikrohohlkugeln deren Wandungsmaterial im Bereich der Wärmestrahlung allerdings transparent sein muß und aus den oben bereits angegebenen Materialien bestehen kann. Auch hier ist es möglich, den Brechungsindex des Wandungsmateriales durch die Einlagerung von kolloidalen Metallteilchen künstlich zu erhöhen. Der Beladungsgradgrad eines Bindemittels mit den im Bereich der Wärmestrahlung transparenten Mikrohohlkugein ist unkritisch, je höher der Beladungsgrad desto niedriger ist die Wärmeemission einer derart ausgeführten Anstrichstoff. Der Durchmesser der Mikrohohlkugeln sollte im Bereich 5 - 500 µm liegen inbesondere aber bei 10 bis 200 µm.

Ein weiterer Weg, einen niedrig emittierenden Anstrichstoff darzustellen, besteht darin, plättchenförmige, schichtförmige Pigmente einzulagern, deren Materialien im Wellenlängenbereich der Wärmestrahlung transparent ist und aus der Reihe der bereits genannten Materialien stammen können oder aus an sich im Bereich der Wärmestrahlung transparenten Materialien, deren Brechungsindex durch die Einlagerung von kolloidalen Metallteilchen künstlich eingestellt wurde.

Aus dem Bereich der Effektlacke für die kosmetische Industrie oder auch für die Autoindustrie sind solche plättchenförmigen Interferenzpigmente bekannt. In der DE-OS 32 21 045 werden Perlglanzpigmente auf der Basis von beschichteten Glimmerschuppen beschrieben. Ihre Wirksamkeit beschränkt sich allerdings auf den sichtbaren Bereich, da ihre interferenzerzeugenden Abmessungen speziell für den Bereich des sichtbaren Lichtes dimensioniert sind und die eingesetzten Materialien im Bereich der Wärmestrahlung nicht transparent sind, sondern absorbierend wirken. Es sind unterschiedliche Verfahren zur Herstellung solcher plättchenförmigen Pigmente bekannt. In den meisten Fällen werden Substanzen chemisch auf Glimmerplättchen ausgefällt. Es sind aber auch Herstellungsverfahren bekannt, bei denen Lackschichten auf ein laufendes Trocknerband z.B. mit einem Rakel aufgetragen werden, um anschließend zu Pigmenten zerkleinert zu werden.

Mit den letztgenannten Verfahren lassen sich besonders kostengünstig Interferenzpigmente mit guter Wirksamkeit im Bereich der Wärmestrahlung in der folgenden Weise herstellen: Es werden vorzugsweise drei Schichten aus insbesondere organischen, im Bereich der Wärmestrahlung transparenten Materialien aufgetragen, bei denen durch die unterschiedlichen Beladungsgrade mit kolloidalen Metallteilchen ein unterschiedlicher Brechungsindex eingestellt wurde. Zunächst wird hierbei eine Schicht mit möglichst hohem Brechungsindex aufgetragen, dann folgt eine Schicht mit möglichst geringem Brechungsindex, die letzte Schicht hat dann wiederum einen hohen Brechungsindex, wobei jede Schicht vor Auftragen der nächsten Schicht vorgetrocknet werden muß, damit die Schichten nicht ineinander verfließen. Die Bezeichnung "möglichst hoher" bzw. "niedriger Brechungsindex" des Materials für die jeweilige Schicht ist in Bezug auf den Brechungsindex des verwendeten Bindemittels zu sehen.

Der Wellenlängenbereich, innerhalb dessen reflektiert werden soll, ist durch die Dicke der einzelnen Schichten einstellbar.

Nach Abtrocknung und Zermahlen erhält man Interferenzpigmente mit hoher Reflexion bzw. niedriger Emission im Bereich der Wärmestrahlung, die in ein für Wärmestrahlung durchlässiges Bindemittel eingebracht werden und zusammen einen Anstrichstoff mit Wirksamkeit im Bereich der Wärmestrahlung darstellen.

Als Bindemittel werden im Rahmen der Erfindung solche bevorzugt, die im Bereich der Wärmestrahlung eine hohe Transparenz aufweisen, wie z.B. Zyklo- oder Chlor-Kautschuk und Bitumenbinder. Soll auch eine gute Beständigkeit gegen Öl, Benzin und Chemikalien vorliegen, so werden im Rahmen der Erfindung Binder bevorzugt, die aus der Gruppe der Polyurethane, Acrylate, PVC-Mischpolymerisate, Polyethylen-Vinylacetat-Mischpolymerisate, Butyl-Kautschuk und Silicon-Alkyd-Harze umfassenden Gruppe ausgewählt werden. In Abhängigkeit von den Anforderungen können auch modifizierte wäßrige Bindemittel auf Polyethylenbasis wie Poligen PE und Poligen WEl der BASF, Ludwigshafen, oder Mischungen der wäßrigen Polyethylenbindemittel mit wäßrigen Acrylatbindemitteln eingesetzt werden.

Es werden einige Beispiele zur Herstellung des erfindungsgemäßen Anstrichstoffes nachfolgend angegeben.

### Beispiel 1

In ein handelsübliches Lackbindemittel auf der Basis von Chlor-Kautschuk, dessen Brechungsindex im Bereich der Wärmestrahlung bei ca. 1,6 liegt, wurden 40 Volumenprozente bezogen auf den Festkörpergehalt des Bindemittels eines Siliziumpulver mit einer mittleren Korngröße von 1,7 µm und einem Brechungsindex von ca. 3,5 im Bereich der Wärmestrahlung eingebracht. Um ein Absetzen der Teilchen im Bindemittel weitgehend zu verhindern, wurde der Lackfilm einer Schnelltrocknung bei 80° C im Ofen unterzogen. Bei der anschließenden Vermessung der Reflexions- bzw. Emissionseigenschaften des dunkelgrauen Lackes wurde ein mittlerer Emissionsgrad von 20% (Reflexion 80%) im Wellenlängenbereich 4,5 bis 6 µm und 8 bis 13 µm festgestellt.

### Beispiel 2

Mit einer druckluftbetriebenen Spritzpistole für Heißkleber wurde Polyäthylen mit dosierter Luftzufuhr mehriagig zu einer Gesamtdicke von 0,5 mm auf eine grundierte Metallplatte gespritzt Durch die dosierte Luftzufuhr enstanden im Polyäthylen Mikrohohlräume deren Durchmesser im Bereich von 5 bis 10 µm lagen. Durch Wiegen wurde ein Verhältnis von Luft zu Binder ermittelt, das bei 50 Volumenprozenten lag. Bei der anschließenden Vermessung der Reflexions- bzw. Emissionseigenschaften der Schicht wurde ein mittlerer Emissionsgrad von 65% (Reflexion 35%) im Wellenlängenbereich 4,5 bis 5 µm und 8 bis 12 µm festgestellt

### Beispiel 3

In eine Polyäthylenschmelze wurden 30 Volumenprozente Kupferteilchen mit einer mittleren Korngröße von 0,5 µm eingebracht und mit einem üblichen Arbeitsverfahren in der Schmelze verteilt Das dermaßen beladene Polyäthylen wurde anschließend mit flüssigem Stickstoff gekühlt und auf eine mittlere Teilchengröße von 3,5 µm gemahlen. Die so erhaltenen Teilchen wurden in einen handelsüblichen Binder auf der Basis von Zyklo-Kautschuk zu 35 Volumenprozenten eingebracht Die Mischung wurde mit handelsüblichen transparenten Farbstoffen grün eingefärbt und auf eine grundierte Metallplatte gestrichen. Bei der anschließenden Vermessung der Reflexions- bzw. Emissionseigenschaften des Anstriches wurde ein breitbaniger Emissionsgrad von 75% (Reflexion 25%) im gesamten Wellenlängenbereich der Wärmestrahlung festgestellt mit Abweichungen in den Bereichen 4,5 bis 5 µm und 8 bis 12 µm. In diesen Bereichen lag der Emissionsgrad bei 35% (Reflexion 65%).

### Beispiel 4

In eine wässrige Dispersion Poligen WE1, ein Pnlyäthylenoxidat der Firma BASF wurden Mikrohohlkugeln aus einem im Bereich der Wärmestrahlung transparenten Material auf der Basis von Silizium und Kalziumfluorid sowie diversen Oxiden zur Schmelzpunktherabsetzung zu 50 Volumenprozenten eingebracht Der Durchmesser der Mikrohohlkugeln lag im Bereich 30 bis 80 µm mit Wandungsstärken im Bereich 1 bis 3 µm. Die Mischung wurde mit ultrafeinen (Durchmesser kleiner 1 µm) Weißpigmenten aus Zinksulfid weiß abgetönt und anschließend bezüglich ihrer Emissionseigenschaften im Bereich der Wärmestrahlung vermessen. Es wurde ein Emissionsgrad von 30% (Reflexion 70%) über den gesamten Bereich der Wärmestrahlung festgestellt Lediglich im Bereich 4 bis 6 µm lag der Emissionsgrad bei 65% (Reflexion35%).

### Beispiel 5

In ein handelsübliches Bindemittel auf der Basis von Zyklo-Kautschuk, der im Bereich der Wärmestrahlung eine hohe Transparenz hat, wurden Kupferteilchen deren mittlerer Durchmesser unter 0,5 µm lag zu 30 Volumenprozenten eingebracht Die Mischung wurde über Lösungsmittel so verdünnt, daß sich nach Austrocknen des auf eine Teflonplatte aufgspritzten Lackes eine Filmdicke von 1 bis 1,5 µm ergab. Auf den ausgehärteten Film wurde eine weiterer Film eines Zyklo-Kautschuk-Lackes ohne die Kupferteilchen gespritzt, dessen Schichtdicke nach Austrocknung und Aushärtung bei 2 bis 3 µm lag. Danach wurde auf diese zweite Schicht wiederum die Schicht mit den Kupferteilchen aufgetragen. Die so erhaltene Schicht wurde von der Teflonplatte abgeschabt und im Mörser zerkleinert Nach Absieben von zu fein gemahlenen Staubpartikeln wurden die plättchenförmigen, im Bereich der Wärmestrahlung transparenten Schichtpigmente unter einem Mikroskop gesichtet Ihre Flächenabmessungen lagen bei 10 bis 20 µm und ihre Schichtdicke bei 4 bis 6 µrn. Durch den Schichtaufbau mit unterschiedlichen Brechungsindizes hatten die Schichtpigmente eine hohe Reflexion im Bereich der Wärmestrahlung. Die Schichtpigmente wurden zu 25 Volumenprozenten in eine modifizierte Dispersion Poligen WE1 der BASF eingebracht und nach farblicher Abtönung mit ultrafeinen (Durchmesser kleiner 1 µm) Weißpigmenten weiß eingefärbt im Wellenlängenbereich der Wärmestrahlung vermessen. Die Emission im Wellenlängenbereich 6 bis 14 µm lag bei 35% (Reflexion 65%) und im Wellenlängenbereich 2 bis 5 µm bei 70% (Reflexion 30%).

## Patentansprüche

1. Anstrichstoff mit niedrigem Emissions- bzw. hohem Reflexionsvermögen im Wellenlängenbereich der Wärmestrahlung, umfassend
ein Bindemittel mit hoher Transparenz im Bereich der Wärmestrahlung und
Teilchen in diesem Bindemittel, die in diesem Wellenlängenbereich eine hohe Transparenz und einen Brechungsindex aufweisen, der vom Brechungsindex des Bindemittels verschieden ist,
**dadurch gekennzeichnet**, daß
das Produkt aus dem Brechungsindex des einzelnen Teilchens im thermischen Infrarotbereich und dem Durchmesser des Teilchens im wesentlichen gleich der halben mittleren Wellenlänge in dem Wellenlängenbereich ist, in dem der Anstrichstoff eine niedrig emittierende Wirkung haben soll.

2. Anstrichstoff gemäß Anspruch 1,
**dadurch gekennzeichnet**, daß
die in dem Bindemittel dispergierten Teilchen aus mindestens einem Material bestehen, das aus der Gruppe aus Germanium, Silizium, Metallsulfiden, Metallseleniden, Metalltelluriden, Tellur, Chloriden, Fluoriden und Antimoniden ausgewählt ist.

3. Anstrichstoff mit niedrigem Emissions- bzw. hohem Reflexionsvermögen im Wellenlängenbereich der Wärmestrahlung, umfassend
ein Bindemittel mit hoher Transparenz im Bereich der Wärmestrahlung und
Teilchen in diesem Bindemittel, die in diesem Wellenlängenbereich eine hohe Transparenz und einen Brechungsindex aufweisen, der vom Brechungsindex des Bindemittels verschieden ist,
**dadurch gekennzeichnet**, daß
die Teilchen Mikrohohlkugeln mit einem Durchmesser von 5 bis 500 µm sind und mit einem Gas gefüllt sind, das im Bereich der Wärmestrahlung nicht absorbierend ist, und
das Wandungsmaterial in diesem Bereich transparent ist und einen Brechungsindex aufweist, der gleich demjenigen oder größer als der des Bindemittels ist.

4. Anstrichstoff mit niedrigem Emissions- bzw. hohem Reflexionsvermögen im Wellenlängenbereich der Wärmestrahlung, umfassend
ein Bindemittel mit hoher Transparenz im Bereich der Wärmestrahlung und
Teilchen in diesem Bindemittel, die in diesem Wellenlängenbereich eine hohe Transparenz und einen Brechungsindex aufweisen, der von dem Brechungsindex des Bindemittels verschieden ist,
**dadurch gekennzeichnet**, daß
die Teilchen aus einem schichtförmigen Pigment gebildet sind, das mindestens drei Schichten aufweist, wobei eine erste, innere Schicht einen kleineren Brechungsindex hat als die beiden äußeren Schichten.

5. Anstrichstoff gemäß Anspruch 4,
**dadurch gekennzeichnet**, daß
der Wellenlängenbereich, innerhalb dessen reflektiert werden soll, durch die Dicke der einzelnen Schichten einstellbar ist.

6. Anstrichstoff gemäß Anspruch 4 oder 5,
**dadurch gekennzeichnet**, daß
der prozentuale Beladungsgrad des Bindemittels mit den Teilchen bezogen auf das Volumen der Gesamtschicht bei 10 bis 70 Prozent, vorzugsweise bei 20 bis 50 Prozent liegt.

7. Anstrichstoff nach Anspruch 1,
**dadurch gekennzeichnet**, daß
das Material, aus dem die Teilchen gebildet sind, kolloidale Metallteilchen mit einem Durchmesser von 0,05 bis 1 µm enthält.

8. Anstrichstoff mit niedrigem Emissions- bzw. hohem Reflexionsvermögen im Wellenlängenbereich der Wärmestrahlung aus einem Bindemittel mit hoher Transparenz in diesem Wellenlängebereich,
**dadurch gekennzeichnet**, daß
im Bindemittel Gaseinschlüsse in der Größenordnung von 5 µm bis 50 µm enthalten sind.

9. Anstrichstoff nach einem der vorhergehenden Ansprüche,
**dadurch gekennzeichnet**, daß das Bindemittel mindestens ein Material umfaßt, ausgewählt aus Polyurethanen, Acrylaten, PVC-Mischpolymerisaten, Polyethylen/Vinylacetat-Mischpolymerisaten, Butyl-Kautschuk und Silicon-Alkyd-Harzen, modifizierten wäßrigen Bindemitteln auf Polyethylenbasis, wäßrigen Bindemitteln auf Acrylatbasis und Mischungen von wäßrigen Bindemitteln auf Polyethylenbasis mit denen auf Acrylatbasis.

10. Verfahren zur Herstellung von Schichtpigmenten,
**dadurch gekennzeichnet**, daß
auf eine erste Schicht aus einem im Bereich der Wärmestrahlung transparenten Material mit einem in diesem Wellenlängenbereich ersten Brechungsindex eine zweite Schicht aus einem in diesem Wellenlängenbereich transparenten Material mit einem zweiten Brechungsindex aufgebracht wird und auf diese eine dritte Schicht aus einem in diesem Wellenlängenbereich transparenten Material mit einem dritten Brechungsindex aufgebracht wird und daß
diese Schichten nach Abtrocknung zu Pigmenten zerkleinert werden.

11. Verfahren gemäß Anspruch 10, **dadurch gekennzeichnet**, daß der Brechungsindex der zweiten Schicht kleiner ist als der Brechungsindex der ersten und dritten Schicht.

12. Verfahren gemäß Anspruch 11, **dadurch gekennzeichnet**, daß die Brechungsindizes der ersten und dritten Schicht gleich sind.

## Claims

1. Paint having low emission or high reflecting power in the wavelength range of thermal radiation comprising
a binder having high transparency in the range of thermal radiation, and
particles in this binder, which have in this wavelength range high transparency and a refractive index, which is different to the refractive index of the binder,
characterised in that the product of the refractive index of the individual particle in the thermal infrared range and the diameter of the particle is essentially equal to half the average wavelength in the wavelength range, in which the paint is to have a low emitting effect.

2. Paint according to claim 1, characterised in that the particles dispersed in the binder consist of at least one material which is selected from the group comprising germanium, silicon, metal sulphides, metal selenides, metal tellurides, tellurium, chlorides, fluorides and antimonides.

3. Paint having low emission or high reflecting power in the wavelength range of thermal radiation comprising
a binder having high transparency in the range of thermal radiation, and
particles in this binder, which have in this wavelength range high transparency and a refractive index, which is different to the refractive index of the binder,
characterised in that the particles are hollow microspheres having a diameter of 5 to 500 µm and are filled with a gas which is not absorbing in the range of thermal radiation, and the wall material is transparent in this range and has a refractive index which is equal to that or greater than that of the binder.

4. Paint having low emission or high reflecting power in the wavelength range of thermal radiation comprising
a binder having high transparency in the range of thermal radiation, and
particles in this binder, which have in this wavelength range high transparency and a refractive index, which is different to the refractive index of the binder,
characterised in that the particles are formed from a layered pigment, which has at least three layers, wherein a first, inner layer has a lower refractive index than the two outer layers.

5. Paint according to claim 4, characterised in that the wavelength range, within which there is to be reflection, can be adjusted by the thickness of the individual layers.

6. Paint according to claim 4 or 5, characterised in that the percentage degree of charging of the binder with the particles, based on the volume of the entire layer, is 10 to 70 per cent, preferably 20 to 50 per cent.

7. Paint according to claim 1, characterised in that the material from which the particles are formed contains colloidal metal particles having a diameter of 0.05 to 1 µm.

8. Paint having low emission or high reflecting power in the wavelength range of thermal radiation made from a binder having high transparency in this wavelength range,
characterised in that gas inclusions in the order of magnitude of 5 µm to 50 µm are present in the binder.

9. Paint according to one of the preceding claims,
characterised in that the binder comprises at least one material, selected from polyurethanes, acrylates, PVC mixed polymers, polyethylene/vinyl acetate mixed polymers, butyl rubber and silicon-alkyd resins, modified aqueous binders based on polyethylene, aqueous binders based on acrylate and mixtures of aqueous binders based on polyethylene with those based on acrylate.

10. Process for producing layered pigments, characterised in that to a first layer of a material which is transparent in the range of thermal radiation and having a first refractive index in this wavelength range is applied a second layer of a material which is transparent in this wavelength range and having a second refractive index, and to the latter is applied a third layer of a material which is transparent in this wavelength range and having a third refractive index, and in that these layers are comminuted to form pigments after drying.

11. Process according to claim 10, characterised in that the refractive index of the second layer is smaller than the refractive index of the first and third layer.

12. Process according to claim 11, characterised in that the refractive indices of the first and third layer are the same.

## Revendications

1. Peinture à faible pouvoir émissif et/ou à fort pouvoir réflectif dans la plage de longueurs d'onde du rayonnement thermique, comprenant :
un liant, à haute transparence dans la plage du rayonnement thermique, et
des particules, dans ce liant, qui présentent, dans cette plage de longueurs d'onde, une haute transparence et un indice de réfraction différent de l'indice de réfraction du liant,
caractérisée en ce que
le produit, calculé à partir de l'indice de réfraction de la particule individuelle, dans la plage des infrarouges thermiques, et du diamètre de la particule, est sensiblement identique à la moitié de la longueur d'onde moyenne dans la plage de longueurs d'onde dans laquelle la peinture doit avoir un faible pouvoir émissif.

2. Peinture selon la revendication 1, caractérisée en ce que les particules dispersées dans le liant sont composées au moins d'un matériau qui est sélectionné dans le groupe constitué du germanium, silicium, sulfures métalliques, séléniures métalliques, tellurures métalliques, tellure, chlorures, fluorures et antimoniures.

3. Peinture à faible pouvoir émissif et/ou à fort pouvoir réflectif, dans la plage de longueurs d'onde du rayonnement thermique, comprenant :
un liant à haute transparence dans la plage du rayonnement thermique, et
des particules, dans ce liant, qui présentent dans cette plage de longueurs d'onde une haute transparence et un indice de réfraction différent de l'indice de réfraction du liant,
caractérisée en ce que
les particules sont des microsphères creuses, d'un diamètre de 5 à 500 µm, et sont remplies d'un gaz qui n'est pas absorbant dans la plage du rayonnement thermique, et le matériau de paroi est transparent dans cette plage et présente un indice de réfraction identique ou supérieur à celui du liant.

4. Peinture à faible pouvoir émissif et/ou à fort pouvoir réflectif, dans la plage de longueurs d'onde du rayonnement thermique, comprenant :
un liant à haute transparence dans la plage du rayonnement thermique, et
des particules, dans ce liant, qui présentent dans cette plage de longueurs d'onde une haute transparence et un indice de réfraction différent de l'indice de réfraction du liant,
caractérisée en ce que
les particules sont constituées d'un pigment se présentant en couches, le nombre de couches étant d'au moins trois, une première couche, intérieure, ayant un plus petit indice de réfraction que les deux couches extérieures.

5. Peinture selon la revendication 4, caractérisée en ce que la plage de longueurs d'onde, à l'intérieur de laquelle on doit réfléchir, est réglable par le biais de l'épaisseur des différentes couches.

6. Peinture selon la revendication 4 ou 5, caractérisée en ce que le degré de chargement, en pourcentage, du liant par les particules, en se référant au volume de la couche globale, est de 10 à 70 %, de préférence de 20 à 50 %.

7. Peinture selon la revendication 1, caractérisée en ce que le matériau d'où sont constituées les particules contient des particules métalliques colloïdales d'un diamètre de 0,05 à 1 µm.

8. Peinture à faible pouvoir émissif et/ou fort pouvoir réflectif dans la plage de longueurs d'onde du rayonnement thermique, constituée d'un liant à haute transparence dans cette plage de longueurs d'onde,
caractérisée en ce que
les inclusions de gaz contenues dans le liant sont de l'ordre de longueur de 5 µm à 50 µm.

9. Peinture selon l'une des revendications précédentes,
caractérisée en ce que le liant comprend au moins un matériau sélectionné parmi les polyuréthannes, acrylates, polymérisats mélangé de PVC, polyéthylène/polymerisats mélangés d'acétate de vinyle, caoutchouc au butyle et résines silicone-alkyde, liants aqueux modifiés à base de polyéthylène, liants aqueux à base d'acrylate et des mélanges de liants aqueux à base de polyéthylène avec ceux à base d'acrylate.

10. Procédé de fabrication de pigments à couches,
caractérisé en ce que
sur une première couche, constituée d'un matériau transparent dans la plage du rayonnement thermique, avec un premier indice de réfraction dans cette plage de longueurs d'onde, est appliquée une deuxième couche constituée d'un matériau transparent dans cette plage de longueurs d'onde, ayant un deuxième indice de réfraction et, sur celle-ci, est appliquée une troisième couche constituée d'un matériau transparent dans cette plage de longueurs d'onde, avec un troisième indice de réfraction, et en ce que, après séchage, ces couches sont broyées pour former des pigments.

11. Procédé selon la revendication 10, caractérisé en ce que l'indice de réfraction de la deuxième couche est inférieur à l'indice de réfraction de la première et de la troisième couches.

12. Procédé selon la revendication 11, caractérisé en ce que les indices de réfraction de la première et de la troisième couches sont identiques.
